# EUROPÄISCHE PATENTANMELDUNG

(11) **EP 0 897 090 A1**
(43) Veröffentlichungstag der Anmeldung: **17.02.1999**
(21) Anmeldenummer: 97113952.2
(22) Anmeldetag: 13.08.1997
(51) Int. Cl.: F24D 17/00, F24J 2/04, H01L 31/058

(54) **Solaranlage**

(71) Anmelder: Mayrhofer, Josef, 5132 Geretsberg (AT)
(72) Erfinder: Mayrhofer, Josef, 5132 Geretsberg (AT)
(74) Vertreter: Hübscher, Heiner, Dipl.-Ing.

(57) **Zusammenfassung**

Eine Solaranlage (1) weist einen an eine Kollektoreinrichtung (2) angeschlossenen, über einen Verbraucher, insbesondere einen Warmwasserbereiter (6), führenden Wärmeträgerkreislauf (4) auf. Um den Anlagenwirkungsgrad zu steigern und einen autarken Betrieb zu ermöglichen, ist dem Wärmeträgerkreislauf (4) zusätzlich zur Kollektoreinrichtung (2) eine Sonnenzelleneinrichtung (3) zugeordnet, die einen in den Rücklauf (7) eingebundenen, mit dem Wärmeträger als Kühlmittel beaufschlagbaren Kühler (9) besitzt.

## Beschreibung

Die Erfindung bezieht sich auf eine Solaranlage mit einem an eine Kollektoreinrichtung angeschlossenen, über einen Verbraucher, insbesondere einen Warmwasserbereiter, führenden Wärmeträgerkreislauf.

Solche Sonnenkollektoranlagen sind bereits in verschiedensten Ausführungen bekannt und werden vor allem zur Brauchwasserbereitung, zur Erwärmung von Warmwasserheizungen u. dgl. eingesetzt, wobei der Gesamtwirkungsgrad neben den Einstrahlverhältnissen und Absorberbedingungen auch von der Rücklauftemperatur des Wärmeträgers abhängt und durch den Eigenenergiebedarf der Anlage für Umwälzpumpen, Steuerungseinrichtungen u. dgl. beeinträchtigt wird.

Zur Nutzung der Sonnenenergie gibt es auch schon Sonnenzelleneinrichtungen, sogenannte Photovoltaikanlagen, deren Sonnenzellen die einfallende Sonnenenergie direkt in elektrische Energie umzuwandeln vermögen, wobei zur Gewinnung in der Praxis verwertbarer Energiemengen eine Vielzahl solcher Sonnenzellen zu entsprechend großen Plattenelementen zusammengefaßt werden. Neben dem inneren Umwandlungswirkungsgrad und den Einstrahlverhältnissen hängt hier die Leistungsfähigkeit der Sonnenzellen auch von ihrer Betriebstemperatur ab, wobei in einem Temperaturbereich um ca. 25° C günstige Verhältnisse bestehen, die Leistungsfähigkeit aber mit zunehmender Betriebstemperatur stark abnimmt. Je steiler die Einstrahlrichtung auf die Sonnenzellenoberflächen wird, um so höher steigt die Betriebstemperatur und der damit abnehmende Wirkungsgrad macht die Vorteile der günstigeren Einstrahlverhältnisse wieder zunichte.

Der Erfindung liegt die Aufgabe zugrunde, eine Solaranlage der eingangs geschilderten Art zu schaffen, die sich durch einen vergleichsweise hohen Wirkungsgrad auszeichnet und die Voraussetzung für einen autarken und dennoch leistungsstarken Betrieb bietet.

Die Erfindung löst diese Aufgabe dadurch, daß dem Wärmeträgerkreislauf zusätzlich zur Kollektoreinrichtung eine Sonnenzelleneinrichtung zugeordnet ist, die einen in den Rücklauf eingebundenen, mit dem Wärmeträger als Kühlmittel beaufschlagbaren Kühler aufweist. Durch diese so einfache wie zweckmäßige Maßnahme werden einerseits für eine den Wirkungsgrad der Sonnerzellen steigernde Kühlung der Sonnenzelleneinrichtung und anderseits für eine den Wirkungsgrad der Kollektoreinrichtung erhöhende Vorwärmung des Wärmeträgers gesorgt, so daß insgesamt eine leistungsstarke Solaranlage entsteht, bei der auf Grund der Stromgewinnung durch die Sonnenzelleneinrichtung ein autarker Betrieb ohne äußere Stromzuleitung u. dgl. möglich ist. Neben der Wassererwärmung durch die Kollektoreinrichtung kommt es außerdem zu einer Stromgewinnung, die neben der Eigenstromversorgung auch eine Fremdnutzung durch die Aufladung von Batterien oder durch die Einspeisung des Stroms mittels Wandler ins Stromnetz erlaubt.

Um eine ausreichende Wärmeabnahme bzw. Wärmespeicherung und damit eine ausreichende Kühlung des Wärmeträgers innerhalb des Wärmeträgerkreislaufes auch bei extremen Verhältnissen zu gewährleisten, umfaßt der als Verbraucher vorgesehene Warmwasserbereiter einen Warmwasserspeicher und wenigstens einen Pufferspeicher, wobei die in Serie hintereinander geschalteten Speicher an den Vorlauf des Wärmeträgerkreislaufes angeschlossene Wärmetauscher aufnehmen, die im Gegenstrom zur Wasserführung vom Kaltwasserzulauf des ersten Pufferspeichers bis zum Warmwasserablauf des Warmwasserspeichers mit dem Wärmeträger beaufschlagbar sind. Mit dieser Kombination hintereinandergereihter Speicher läßt sich die Sonnenenergie je nach Angebot durch Aufwärmen des Brauchwassers im Warmwasserspeicher und dann fortschreitend in den Pufferspeichern nützen, so daß der dabei rückgekühlte Wärmeträger für die Sonnenzeileneinrichtung als Kühlmittel dienen kann, wozu eine Rücklauftemperatur von ca. 15 bis 20° C nötig ist. Je nach sonnenreichen oder sonnenarmen Gebieten kann selbstverständlich der Warmwasserspeicher mit einer zusätzlichen Heizeinrichtung ausgestattet sein oder es werden Pufferspeicher mit ausreichendem Puffervolumen eingerichtet, um ein Überhitzen der Anlage sicher zu vermeiden.

Durch das im Gegenstrom zum Wärmeträger geführte Kaltwasser gib es im ersten Pufferspeicher im Bereich des Kaltwasserzulaufes dann stets die für die Rückkühlung des Wärmeträgers ausreichend kühlen Temperaturen, die mittels des entsprechenden Wärmetauschers und einer geeigneten Durchströmregelung für eine weitgehend konstante und niedrige Rücklauftemperatur im Wärmeträgerkreislauf sorgen.

Sind die Wärmetauscher über temperaturgesteuerte Ventile an den Vorlauf angeschlossen, kann auf einfache Weise die vom Wärmeangebot abhängige Nutzung der Speicher unter Berücksichtigung der gewünschten Rückkühlwirkung sichergestellt werden.

Grundsätzlich ist es möglich, die Kollektoreinrichtung und die Sonnenzelleneinrichtung unabhängig voneinander an geeigneten Orten aufzustellen und diese Einrichtungen auch der Sonne nachzuführen. Damit könnten entsprechend großflächige Anlagen installiert und auch stets für die günstigsten Einstrahlverhältnisse gesorgt werden. Eine besonders rationelle und kompakte Anlage entsteht aber dadurch, daß die Kollektoreinrichtung und die Sonnenzelleneinrichtung auf einem gemeinsamen Träger montiert sind, wobei der Kühler der Sennenzelleneinrichtung direkt mit der Kollektoreinrichtung in Leitungsverbindung steht. Hier läßt sich auf platzsparende und konstruktiv aufwandsarme Weise die Solaranlage aufstellen und betreiben, wobei zur entsprechenden Optimierung der Einstrahlverhältnisse der gemeinsame Träger auf einem Drehgestell aufgebaut und um eine Vertikalachse und/oder eine Horizontalachse schwenkverstellbar abgestützt sein kann, so daß sich eine Teil- oder Vollnachführung ergibt.

Um für einen guten Wärmeübergang im Sonnenzellen- und Kollektorbereich zu sorgen und eine effiziente Kühlung in der Sonnenzelleneinrichtung und eine schnelle Aufwärmung des Wärmeträgers in der Kollektoreinrichtung zu erreichen, weisen die Kollektoreinrichtung eine Absorberplatte mit nach einem Netzmuster verlaufenden Wärmeträgerkanälen und die Sonnenzelleneinrichtung einen unterhalb einer Sonnenzellenaufnahmeplatte angeordneten Kühler aus einer Kühlerplatte mit ein Netzmuster bildenden Kühlkanälen auf. Die nach einem Netzmuster, beispielsweise einem Wabenmuster, verlaufenden Kanäle bringen eine gleichmäßige Verteilung des Wärmeträgers über die Kollektor-bzw. Kühlerplatte mit sich, wodurch es zur gewünschten guten Wärmeübertragung kommt. Dabei läßt sich durch die Dichte des Netzmusters und den Kanalquerschnitt die Beaufschlagungsmenge und die Kontaktflächengröße beeinflussen, was eine Anpassung der Kühl- bzw. Erwärmungsverhältnisse an die jeweiligen Gegebenheiten erlaubt.

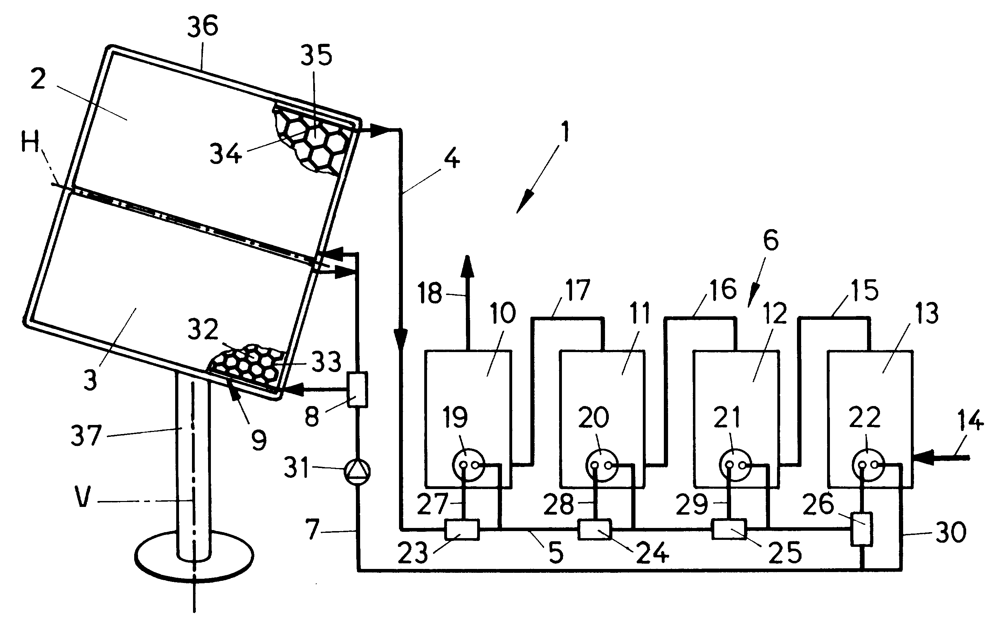

In der Zeichnung ist der Erfindungsgegenstand beispielsweise an Hand eines Anlagenschemas näher veranschaulicht.

Eine Solaranlage 1 umfaßt eine Kollektoreinrichtung 2 und eine dieser Kollektoreinrichtung 2 vorgeordnete Sonnenzelleneinrichtung 3 sowie einen Wärmeträgerkreislauf 4, an dessen Vorlauf 5 ein Warmwasserbereiter 6 angeschlossen und in dessen Rücklauf 7 vorzugsweise über ein temperaturgesteuertes Ventil 8 ein Kühler 9 der Sonnenzelleneinrichtung 3 eingebunden ist. Dadurch kann der Wärmetrager als Kühlmittel für die Sonnenzelleneinrichtung 3 genutzt werden, um die Sonnenzellen auf die optimale Betriebstemperatur zu kühlen und außerdem durch die von der Sonnenzelleneinrichtung 3 übernommene Wärme den Wärmeträger für den anschließenden Aufwärmvorgang in der Kollektoreinrichtung 2 vorzuwärmen, was zu einer entsprechenden Wirkungsgradsteigerung führt.

Der Warmwasserbereiter 6 besteht aus dem eigentlichen Warmwasserspeicher 10 und beispielsweise drei in Serie hintereinandergeschalteten Pufferspeichern 11, 12, 13, wobei das Kaltwasser durch einen Kaltwasserzulauf 14 in den ersten Pufferspeicher 13 strömt und dann von hier mittels Überströmleitungen 15, 16, 17 durch die anschließenden Pufferspeicher bis in den Wärmwasserspeicher 10 und zum Warmwasserablauf 18 gelangt. Zur Wärmeübertragung vom Wärmeträger an das Brauchwasser nimmt jeder Speicher einen Wärmetauscher 19, 20, 21, 22 auf, welche Wärmetauscher über temperaturgesteuerte Ventile 23, 24, 25, 26 und entsprechende Versorgungsleitungen 27, 28, 29, 30 an den Vorlauf 5 angeschlosssen sind. Damit besteht eine ausreichende Speicherkapazität, um auch bei großem Energieangebot in sonnenreichen Tagen die Wärme übernehmen und ein Überhitzen der Anlage verhindern zu können und dennoch für ein ausreichendes Rückkühlen des Wärmeträgers zu sorgen. Im Pufferspeicher 13, in den der Kaltwasserzulauf 14 mündet, herrschen die tiefsten Wassertemperaturen, so daß der hier vorgesehene Wärmetauscher 22 auf die Rückkühlung des Wärmeträgers abgestellt ist und eine annähernd gleiche Rücklauftemperatur von ca. 15 bis 20° C gewährleisten kann.

Im Rücklauf 7 des Wärmeträgerkreislaufes sitzt eine Umwälzpumpe 31, die einen entsprechenden Wärmeträgerumlauf sicherstellt und den Wärmeträger als Kühlmittel in den Kühler 9 der Solarzelleneinrichtung 3 pumpt. Hier gibt es eine Kühlerplatte 32 mit in Netzmustern verlegten Kühlkanälen 33, die durch geeignete Prägungen der Kühlerplatte entstehen und eine gleichmäßige Kühlmittelbeaufschlagung der Solarzellen mit sich bringen. Ähnliche Netzmuster bilden auch die Wärmeträgerkanäle 34 der Absorberplatte 35 der anschließend durchflossenen Kollektoreinrichtung 2, so daß es sowohl für die Solarzelleneinrichtung 3 als auch für die Kollektoreinrichtung 2 zu günstigen Wärmeübertragungsverhältnissen kommt.

Die Kollektoreinrichtung 2 und die Solarzelleneinrichtung 3 können auf einem gemeinsamen Träger 36 montiert sein, der auf einem Drehgestell 37 aufgebaut ist und zum Nachführen in Abhängigkeit vom jeweiligen Sonnenstand um eine Horizontalachse H und eine Vertikalachse V schwenkverstellbar ist.

Es entsteht eine kompakte, leistungsstarke und für einen autarken Betrieb bestens geeignete Solaranlage.

## Patentansprüche

1. Solaranlage (1) mit einem an eine Kollektoreinrichtung (2) angeschlossenen, über einen Verbraucher, insbesondere einen Warmwasserbereiter (6), führenden Wärmeträgerkreislauf (4), dadurch gekennzeichnet, daß dem Wärmeträgerkreislauf (4) zusätzlich zur Kollektoreinrichtung (2) eine Sonnerzelleneinrichtung (3) zugeordnet ist, die einen in den Rücklauf (7) eingebundenen, mit dem Wärmeträger als Kühlmittel beaufschlagbaren Kühler (9) aufweist.

2. Solaranlage nach Anspruch 1, dadurch gekennzeichnet, daß der als Verbraucher vorgesehene Warmwasserbereiter (6) einen Warmwasserspeicher (10) und wenigstens einen Pufferspeicher (11, 12, 13) umfaßt, wobei die in Serie hintereinander geschalteten Speicher (10, 11, 12, 13) an den Vorlauf (5) des Wärmeträgerkreislaufes (4) angeschlossene Wärmetauscher (19, 20, 21, 22) aufnehmen, die im Gegenstrom zur Wasserführung vom Kaltwasserzulauf (14) des ersten Pufferspeichers (13) bis zum Warmwasserablauf (18) des Warmwasserspeichers (10) mit dem Wärmeträger beaufschlagbar sind.

3. Solaranlage nach Anspruch 2, dadurch gekennzeichnet, daß die Wärmetauscher (19, 20, 21, 22) über temperaturgesteuerte Ventile (23, 24, 25, 26) an den Vorlauf (5) angeschlossen sind.

4. Solaranlage nach einem der Ansprüche 1 bis 3, dadurch gekennzeichnet, daß die Kollektoreinrichtung (2) und die Sonnenzelleneinrichtung (3) auf einem gemeinsamen Träger (36) montiert sind, wobei der Kühler (9) der Sonnenzelleneinrichtung (3) direkt mit der Kollektoreinrichtung (2) in Leitungsverbindung steht.

5. Solaranlage nach Anspruch 4, dadurch gekennzeichnet, daß der gemeinsame Träger (36) auf einem Drehgestell (37) aufgebaut und um eine Vertikalachse (V) und/oder eine Horizontalachse (H) schwenkverstellbar abgestützt ist.

6. Solaranlage nach einem der Ansprüche 1 bis 5, dadurch gekennzeichnet, daß die Kollektoreinrichtung (2) eine Ansorberplatte (34) mit nach einem Netzmuster verlaufenden Wärmeträgerkanälen (35) aufweist.

7. Solaranlage nach einem der Ansprüche 1 bis 6, dadurch gekennzeichnet, daß die Sonnenzelleneinrichtung (3) einen unterhalb einer Sonnenzellenaufnahmeplatte angeordneten Kühler (9) aus einer Kühlerplatte (32) mit ein Netzmuster bildenden Kühlkanälen (33) aufweist.
